**Europäisches Patentamt**

**European Patent Office**

**Office européen des brevets**

(19)

(11) Veröffentlichungsnummer: **0 004 883**
**B1**

(12)

# EUROPÄISCHE PATENTSCHRIFT

(45) Veröffentlichungstag der Patentschrift:
16.09.81

(21) Anmeldenummer: **79100937.6**

(22) Anmeldetag: **29.03.79**

(51) Int. Cl.³: **B 01 J 2/30,** C 01 D 9/20,
C 01 C 1/28 // C05C1/02,
C05C5/00

(54) **Verfahren zur Herstellung rieselfähiger, anorganischer Ammonium- und Alkalisalze.**

(30) Priorität: **26.04.78 DE 2818151**

(43) Veröffentlichungstag der Anmeldung:
**31.10.79 Patentblatt 79/22**

(45) Bekanntmachung des Hinweises auf die Patenterteilung:
**16.09.81 Patentblatt 81/37**

(84) Benannte Vertragsstaaten:
**DE FR GB IT**

(56) Entgegenhaltungen:
**CH-A-328 415**
**BE-A-661 598**
**FR-A-2 126 427**

(73) Patentinhaber: **BASF Aktiengesellschaft,**
**Carl-Bosch-Strasse 38, D-6700 Ludwigshafen (DE)**

(72) Erfinder: **Widder, Rudi, Dr., In der Taesch 7,**
**D-6906 Leimen (DE)**
Erfinder: **Kirner, Helmut, Dr., Fussgoenheimer Strasse 31,**
**D-6715 Lambsheim (DE)**

Verfahren zur Herstellung rieselfähiger, anorganischer Ammonium- und Alkalisalze

Die Erfindung betrifft ein Verfahren zur Herstellung rieselfähiger, anorganischer Ammonium- oder Alkalisalze.

Es ist bekannt, dass zahlreiche Stoffe, insbesondere auch hygroskopische Verbindungen und Salze wie anorganische Ammoniumsalze und Alkalisalze beim Transport und bei der Lagerung häufig physikalische Veränderungen erleiden (Ullmanns Enzyklopädie der technischen Chemie, 3. Auflage, Bd. 6, S. 171 und 172; Chemistry and Industry 1966, S. 844 bis 850). Sie erhärten, backen zusammen und verlieren ganz oder teilweise ihre lockere Konsistenz und somit ihre Rieselfähigkeit, sie agglomerieren, verklumpen beim Transport, backen an Rohr- und Gefässwänden an bzw. zerfliessen. Ihr Gebrauchswert wird dadurch stark vermindert, sie lassen sich nicht mehr ohne Schwierigkeiten fördern, nicht mehr gleichmässig dosieren, verstopfen die Fördereinrichtungen, sind schwierig zu lagern, was zu Betriebsstörungen und Stoffverlusten führt, und liegen, z.B. als Düngemittel, nicht mehr in streubarer Form vor. Der Verlust der Rieselfähigkeit hat verschiedene Ursachen. Beispielsweise lassen Hygroskopizität der Salze, Temperaturwechsel und/oder Luftfeuchtigkeit durch wechselnde Absorption und Desorption von Wasser die einzelnen Körner verkitten. Ungünstige Kristallform bzw. ein gewisser Gehalt an Lösungsmittel oder Wasser begünstigen die Bildung von Adsorbaten (Kriechlauge) und somit das Zusammenbacken. Plastizität der Körner und der Staudruck, der beim Anhäufen grösserer Mengen von Salz auf die unteren Schichten der so gebildeten Stapel einwirkt, lassen das Salz ebenfalls zusammenbacken. Je feiner verteilt das Salz ist, desto grösser sind die Gesamtoberflächen der Einzelteilchen, die Verbackungsgefahr und somit der Verlust an Rieselfähigkeit. Bezüglich des Verhaltens hygrokopischer bzw. zur Verbackung neigender Stoffe und der die Rieselfähigkeit bestimmenden Faktoren wird auf Ullmanns Enzyklopädie der technischen Chemie, 3. Auflage, Bd. 1, S. 564 ff., und Houben-Weyl, Methoden der organischen Chemie, Bd. 1/2, S. 9 ff., verwiesen.

Entsprechende Salze werden häufig in Form von wässrigen Lösungen weiterverarbeitet. Schon aus wirtschaftlichen Gründen, z.B. Transportkosten, oder aus Gründen der späteren Verwendung, z.B. als Katalysator, streubares Düngemittel oder als Zusatz zu Futtermitteln, sind aber solche Stoffe in fester Form, insbesondere in Gestalt von Pulvern mittlerer oder hoher Feinverteilung von besonderem Vorteil. Zur Vermeidung der geschilderten Nachteile werden die leicht zusammenbackenden Stoffe mit einem geeigneten, nicht hygroskopischen Material, z.B. Kieselgur, Korkmehl, Quarzmehl, Quarzsand, gepudert.

Um die Lagerbeständigkeit der zusammenbackenden Stoffe in befriedigender Weise zu verbessern, sind in der Regel grössere Mengen an Puderstoffen erforderlich. Diese grossen Mengen an Puderstoff verursachen neben einem nicht unerheblichen Arbeitsaufwand auch beträchtliche zusätzliche Kosten. Hinzu kommt, dass die grossen Pudermittelmengen nur schlecht auf den Oberflächen der Salze haften; dies führt insbesondere beim Ein- und Ausspeichern der Düngemittel zu erheblichen Staubbelästigungen sowie zur Entmischung von Salz und Puderstoff.

Es sind daher auch schon organische Zusatzstoffe bekannt geworden, die die anorganischen Puder ersetzen sollen. Hierbei handelt es sich in der Regel um Stoffe, die wasserabstossend wirken oder um oberflächenaktive Substanzen. So hat man schon neben Paraffin, Stearin, Naphthalin und dgl. wasserunlösliche Metallseifen, mehrwertige Alkohole, Glykol und Glycerin vorgeschlagen.

Es ist auch schon bekannt, zum Verhindern des Zusammenbackens den Salzen geringe Mengen an Farbstoffen von sulfoniertem aromatischem Charakter zuzusetzen. Der Einsatz dieser Verbindungen scheidet jedoch häufig insbesondere bei Ammoniumsalzen deshalb aus, da durch den Zusatz dieser Verbindungen das Salzkorn erweicht und damit bedingt seine Riesel- und Streufähigkeit beeinträchtigt wird.

Bekannt ist auch (deutsche Patentanmeldung B 34 484), bei ammoniumnitrathaltigen Düngemitteln diesen geringe Mengen an Naphthalinsulfosäuren zuzusetzen, die eine oder mehrere Alkyl-, Aryl- oder Aralkylgruppen enthalten. Gemäss einem weiteren bekannten Vorschlag sollen anorganische Ammonium- oder Kaliumsalze dadurch rieselfähig bleiben, dass man ihnen ein Gemisch von Halbestern der Schwefelsäure mit isomeren Nonanolen zusetzt (DE-c 2 210 798).

Viele der bekannten Antibackmittel bringen beim Einsatz der mit ihnen behandelten Produkte oft mehrere Nachteile mit sich, die deren Verwendung erschweren oder – je nach Einsatzzweck – sogar unmöglich machen, z.B.:

1. Der oft unangenehme Geruch mancher Antibackmittel geht auch auf das behandelte anorganische Salz über und wird bei dessen Verwendung als lästig empfunden.

2. Die aus behandelten Salzen bereitete Lösung ist trüb, es scheiden sich – je nach pH und Salzkonzentration – Antibackmittel aus der Lösung flockig oder als Schmieren ab. Filter setzen sich zu, Ventile und Leitungen verstopfen, bei manchen Mitteln ist Schaumbildung festzustellen.

3. Aus behandelten Salzen bereitete Schmelzen werden schwarz, es zeigen sich Verkohlungserscheinungen. Zersetzungsprodukte von Antibackmittel scheiden sich ab. Mischungen von solchen Produkten mit Salz können zu Verpuffungen führen. Gelegentlich tritt ein Schäumen der Schmelze auf.

All dies beeinträchtigt die Verwendbarkeit erheblich.

Der vorliegenden Erfindung lag die Aufgabe zugrunde, ein spezifisch auf das Verhindern des Zusammenbackens von Ammonium- und/oder Alkalisalzen, insbesondere Nitraten und/oder Nitriten durch Einarbeiten von Salzen aromatischer Sulfosäuren abzielendes Verfahren bereitzustellen.

Es wurde gefunden, dass diese Aufgabe dadurch gelöst werden kann, dass man als aromatische Sulfosäuren Gemische verwendet, wie sie bei der Umsetzung von 1 Mol Naphthalin mit 1 bis 2,5 Molen Styrol in Gegenwart katalytischer Mengen Schwefelsäure bei Temperaturen von 50 bis 120°C und anschliessender Sulfierung und Neutralisierung erhalten worden sind.

Die als Antibackmittel verwendeten Sulfonate liegen, je nachdem ob man die Neutralisation mit Alkalilaugen, wie insbesondere Natron- oder Kalilauge oder mit Ammoniak durchgeführt hat, in Form von Alkali- und/oder Aminsalzen vor. Die Herstellung der Sulfonate erfolgt nach an sich bekanntem Verfahren, indem man Naphthalin und Styrol im Molverhältnis 1:1–2,5 in Gegenwart von katalytischen Mengen konzentrierter Schwefelsäure, z.B. 0,5 bis 15 Gewichtsprozent bezogen auf das Reaktionsgemisch, bei Temperaturen von 50 bis 120°C einer Friedel-Krafts-Reaktion unterwirft, und das erhaltene Reaktionsgemisch mit Hilfe von bekannten Sulfonierungsmitteln, wie Oleum, Schwefeltrioxid, oder Chlorsulfonsäure bei Temperaturen von 20 bis 150°C sulfiert und anschliessend bei Temperaturen von 0 bis 100°C neutralisiert. Für die Sulfierung kann man je Mol Styrol/Naphthalin etwa 0,3 bis 2,0 Mol Sulfonierungsmittel bezogen auf $SO_3$ einsetzen. Bei der Neutralisation erhält man eine wässerige Lösung bzw. Suspension des Sulfonates, die direkt für die Behandlung des Salzes eingesetzt werden kann.

Bei der Umsetzung entsteht ein Salzgemisch von verschiedenen Sulfosäuren wechselnder Zusammensetzung, insbesondere Salze von verschiedenen Sulfosäuren des 1-Phenyl-2-Naphthyl-Äthans.

In das Salz wird das neutralisierte Sulfonat eingearbeitet, in der Regel durch Imprägnation, z.B. durch Tränken oder Besprühen mit entsprechenden Lösungen oder Suspensionen. Zur Lösung bzw. Suspension des Alkyl-diarylsulfonats verwendet man inerte Lösungsmittel, zweckmässig Wasser, gegebenenfalls kommen auch Alkanole wie Äthanol, Methanol, aromatische Kohlenwasserstoffe wie Toluol, Xylole, oder entsprechende Lösungsmittelgemische in Frage.

Die Menge an Lösungs-(Suspensions)mittel beträgt im allgemeinen das 35- bis 100fache, vorzugsweise 20- bis 50fache der Gewichtsmenge an Sulfonat. Die Imprägnierung wird in der Regel bei einer Temperatur von 10 bis 150°, vorzugsweise 70 bis 120°C, durchgeführt.

Nach der Imprägnierung wird das mit dem Antibackmittel beladene Salz getrocknet, z.B. im Trommeltrockner, Sprühtrockner, Stromtrockner oder Blitztrockner, im allgemeinen bei einer Temperatur von 50 bis 200°C, abhängig von dem gewünschten Feuchtigkeitsgehalt des Endstoffes. Gegebenenfalls kann das Salz dann noch in beliebiger Weise zerkleinert werden, z.B. mittels Stiftmühlen oder Sichtern. Man kann Trocknen und Vermahlen des Salzes auch in einer Operation, beispielsweise mit Hilfe eines Mahltrockners durchführen. Je nach Verwendungszweck können weitere Operationen, z.B. Vermischen mit anderen Stoffen, an die genannten Operationen angeschlossen oder mit ihnen verbunden werden. Man kann das Verfahren und die Verarbeitungsoperationen diskontinuierlich oder kontinuierlich, drucklos oder unter Druck durchführen. Die nach dem Verfahren der Erfindung hergestellten rieselfähigen Salze liegen im allgemeinen in einer Partikelgrösse von 0,1 bis 3,5 mm Durchmesser vor.

Ebenfalls können vorgenannte Lösungen oder Suspensionen des Antibackmittels in rationeller Weise schon den Kristallisationslösungen der Salze bei beispielsweise 25 bis 110°C direkt zugesetzt werden. Das auskristallisierte Salz und aus der Mutterlauge durch Einengen anfallende Anteile werden filtriert, gegebenenfalls noch in vorgenannter Weise getrocknet und dann direkt auf seinen Verwendungszweck, z.B. zum Kunstdüngergranulat, weiterverarbeitet. Diese Arbeitsweise ist ebenfalls vorteilhaft bei Salzen, die als Nebenprodukte anfallen oder weiterverarbeitet werden; bei der Caprolactamsynthese anfallendes Ammoniumsulfat, das noch entsprechende Verunreinigungen enthalten kann, wird zweckmässig ohne weitere Reinigung mit dem Gemisch in vorgenannter Weise behandelt. Das Antibackmittel stört die Kristallisation nicht. Ebenfalls kann man auch das Antibackmittel durch Mischen dem heissen Salz bzw. dem feuchten oder getrockneten Salz zumischen.

Besonders selektiv und vorteilhaft sind die erfindungsgemässen Zusatzstoffe im Falle von Natriumnitrat, Natriumnitrit, Ammoniumnitrat, Ammoniumnitrit aber auch Ammoniumsulfat sowie Ammoniumchlorid, Kaliumsulfat; den entsprechenden Mono-, Di- und Triphosphaten des Ammoniums und/oder des Kaliums; Bisulfaten wie Kaliumbisulfat, Carbonaten und Bicarbonaten wie Kaliumbicarbonat, Ammoniumcarbonat, Kaliumtetrafluoroborat, Ammoniumbromid, Kaliumborat, Kaliumchlorat, Kaliumperchlorat, Kaliumfluorid, Kaliumjodid, Kaliumpermanganat, Kaliumsulfit, Kaliumthiosulfat, Kaliumsulfid oder Gemischen dieser Salze.

Das Antibackmittel wird vorzugsweise in einer Menge von 0,0005 bis 0,2 Gewichtsprozent, bezogen auf das anorganische Salz eingesetzt.

Die hygroskopischen Eigenschaften der Salze werden durch die genannten Operationen nicht wesentlich beeinflusst. Die nach dem Verfahren der Erfindung hergestellten rieselfähigen Salze können somit grössere Wassermengen, z.B. von 0,01 bis 3 Gewichtsprozent aufnehmen, ohne ihre Rieselfähigkeit einzubüssen. Sie verkleben, schmieren, verklumpen oder verbacken nicht, das aufgenommene Wasser tritt auch bei längerem Lagern oder bei Veränderungen in der Luftfeuchtigkeit nicht aus. Dieses vorteilhafte Verhalten wird auch durch Zerkleinerungsoperationen nicht beeinflusst.

Die nach dem Verfahren der Erfindung herstellbaren rieselfähigen, streubaren Salze können vorteilhaft gehandhabt, dosiert, gelagert und transportiert werden und sind für viele Gebiete, z.B. Trocknung, Katalyse, Zusatz zu Futtermitteln geeignet. Sie können einen höheren Feinsalzanteil enthalten. Infolge der guten Netzwirkung des Antibackmittels werden die Salze bei ihrer späteren Auflösung auch schneller, vollständiger und gleichmässiger gelöst.

Die in den Beispielen angegebenen Teile bedeuten Gewichtsteile, Prozentangaben Gewichtsprozente.

Beispiel 1

In einem 1-l-Kolben mit Rührer, Thermometer und Rückflusskühler wird eine Schmelze (80 bis 85°C) von 128 g (1 Mol) Naphthalin vorgelegt. Unter Rühren werden bei derselben Temperatur 10 g Schwefelsäure 100%ig langsam zugesetzt. Zu diesem Reaktionsgemisch gibt man im Laufe von 120 Minuten unter Kühlen und starkem Rühren bei ca. 80°C 156 g (1,5 Mol) Styrol und rührt bei dieser Temperatur ca. 10 Stunden nach.

Zur Sulfierung dieses Reaktionsgemisches werden bei 70 bis 80°C unter Rühren 250 g Oleum 24%ig (0,75 Mol) zugegeben und noch 2 Stunden nachgerührt.

Die so dargestellte Sulfonsäure wird zur Neutralisation in eine Lösung von ca. 150 g Ätznatron in 750 g Wasser bei 40 bis 50°C unter Rühren gegeben. Man erhält eine braune Lösung mit einem Trockengehalt von 38 bis 40%, 60 bis 62% Wasser und 5 bis 8% $Na_2SO_4$.

A) 1000 Teile Natriumnitrat werden mit 2,5 Teilen einer 40%igen Lösung eines Gemisches der Natriumsalze von Sulfonsäuren von Benzylnaphthalin intensiv vermischt. Das so behandelte Produkt bleibt auch nach mehrwöchigem Lagern locker und rieselfähig, wogegen ein nicht behandeltes Produkt während desselben Zeitraumes so verfestigt, dass es in einem Silo nur unter Zuhilfenahme von Spitzhacke oder Presslufthammer und anderer Zerkleinerungsmethoden wieder pulverförmige Beschaffenheit annimmt und sich nach einer gewissen Lagerdauer erneut verfestigt.

B) 1000 Teile Natriumnitrat wird mit 2 Teilen einer 30%igen Lösung, wie sie gemäss Beispiel 1 erhalten worden ist, intensiv vermischt, getrocknet und gekühlt. Das so behandelte Produkt bleibt auch nach mehrwöchigem Lagern locker und verhärtet nicht. Obwohl dieses Produkt weniger Antibackmittel als Beispiel 1 A) aufweist, bleibt es nach vergleichbarer Zeit bei weitem besser rieselfähig als jenes. Dagegen ist nicht behandeltes Natriumnitrat (Beispiel 1) nach derselben Zeit so verhärtet, dass es nur durch Zerklopfen mit einem Hammer und/oder durch Passieren eines Brechers in rieselfähige Form überführt werden kann, aber nach einiger Zeit erneut verhärtet.

Beispiel 2

Ammoniumsulfat, welches mit 0,01% einer Lösung gemäss Beispiel 1 (3,3 Teile einer 30%igen Lösung auf 10 000 Teile Salz) behandelt wurde, bleibt auch nach mehreren Wochen noch locker, während unbehandeltes Salz schon nach wenigen Tagen stark verhärtet.

Beispiel 3

Natriumnitrit, welches in unbehandeltem Zustand in Säcken unter Druck gelagert, in kurzer Zeit so verhärtet, dass die Ware nur mit Hilfe von grossem mechanischem Aufwand (Zerkleinern in Brechern nach vorherigem Zerschlagen mit einem Vorschlaghammer zu Brocken) in Pulverform überführt werden kann, ist, nachdem es mit ca. 1 Teil (ber. 100%) pro 1000 Teilen Salz eines gemäss Beispiel 1 hergestellten Sulfonat-Gemisches behandelt wurde, bei gleicher Lagerung wie beschrieben, auch nach Wochen noch so locker, dass einfaches Bewegen des Sackes genügt, um den gesamten Inhalt wieder in einwandfrei rieselfähige Form zu überführen.

Beispiel 4

Messmethode für die Verbackungstendenz von Feinkristallisaten.

Testsubstanzen

I. $NaNO_2$ unbehandelte Ware.

II. $NaNO_2$ mit 0,03% des Na-Salzes des benzylnaphthalinsulfonsauren Natriums (Patentanmeldung B 34 484).

III. $NaNO_2$ mit 0,03% (Sulfonatgemisch gemäss Beispiel 1).

Testmethode

1. In luftdicht verschlossenen zylinderförmigen Behältern von 6 cm innerem Durchmesser werden jeweils 300 g $NaNO_2$ eingefüllt und von oben mit ca. 800 g belastet. Lagerzeit 25 Tage. Lagertemperatur 20° bis 25°C.

2. Die nach 1. entstandenen «Presslinge» werden jeweils auf ein 1-mm-Maschendraht-Sieb (200 mm Durchmesser) gebracht und auf einer Labor-Siebmaschine gesiebt.

Die hierbei auftretenden Abriebkräfte reichen aus, die zusammenhängenden Salzbrocken zu zerstören, so dass das ganze Salz durch das 1-mm-Sieb hindurchfällt.

Die gemessenen Zeiten sind folgende:
I. $NaNO_2$ unbehandelte Ware 10 Minuten
II. $NaNO_2$ 1 Minute
III. $NaNO_2$ 15 Sekunden

Bemerkungen

Die erhaltenen Messwerte sind Durchschnittswerte aus je 3 Messungen. Hieraus ergibt sich die gute Rieselfähigkeit der erfindungsgemäss behandelten Salze (III), die nicht nur gegenüber unbehandelten Salzen (I), sondern auch gegenüber einer Ware, die mit anderen Sulfonaten gemäss der deutschen Patentanmeldung B 34 484 behandelt worden sind (II), deutlich verbessert ist.

**Patentanspruch**

Verfahren zum Verhindern des Zusammenbakkens von anorganischen Ammonium- und/oder Alkalisalzen, insbesondere Nitriten oder Nitraten, durch Einarbeiten von Salzen aromatischer Sulfosäuren, dadurch gekennzeichnet, dass man als aromatische Sulfosäuren Gemische verwendet, wie sie bei der Umsetzung von 1 Mol Naphthalin mit 1 bis 2,5 Molen Styrol in Gegenwart katalytischer Mengen Schwefelsäure bei Temperaturen von 50 bis 120°C und anschliessender Sulfierung und Neutralisation erhalten worden sind.

**Claim**

A process for preventing the caking of inorganic ammonium and/or alkali metal salts, particularly nitrites or nitrates, by working in salts of aromatic sulfo acids, characterized in that there are used as aromatic sulfo acids mixtures such as have been obtained in the reaction of 1 mole of naphthalene with 1 to 2.5 moles of styrene in the presence of catalytic amounts of sulfuric acid at temperatures of from 50° to 120°C and subsequent sulfonation and neutralization.

**Revendication**

Procédé pour empêcher l'agglomération de sels inorganiques d'ammonium et/ou alcalins, en particulier des nitrites ou nitrates, par apport de sels d'acides sulfoniques, aromatiques, caractérisé par le fait qu'on utilise, comme acides sulfoniques aromatiques, des mélanges tels qu'ils ont été obtenus par réaction de 1 mole de naphthalène avec 1 à 2,5 moles de styrene, en présence de quantités catalytiques d'acide sulfurique à des températures de 50 à 120°C, puis sulfonation et neutralisation.